(19) **Europäisches Patentamt / European Patent Office / Office européen des brevets**

(11) **EP 3 415 421 B1**

(12) **FASCICULE DE BREVET EUROPEEN**

(45) Date de publication et mention
de la délivrance du brevet:
**21.07.2021 Bulletin 2021/29**

(21) Numéro de dépôt: **18170011.3**

(22) Date de dépôt: **30.04.2018**

(51) Int Cl.:
**B64C 27/14** (2006.01)  **B64D 31/06** (2006.01)
**B64C 27/00** (2006.01)  **G05D 1/08** (2006.01)
**F02C 9/00** (2006.01)

(54) **SYSTEME DE REGULATION POUR CONTROLER LE COMPORTEMENT VIBRATOIRE ET/OU LA STABILITE EN TORSION D'UNE CHAINE CINEMATIQUE, GIRAVION EQUIPE D'UN TEL SYSTEME DE REGULATION ET PROCEDE DE REGULATION ASSOCIE**

REGULIERUNGSSYSTEM ZUR STEUERUNG DES SCHWINGUNGSVERHALTENS UND / ODER DER TORSIONSSTABILITÄT EINES DRIVETRAINS, EINES MIT EINEM SOLCHEN REGULIERUNGSSYSTEM AUSGESTATTETEN ROTORFAHRZEUGS, UND EINES ZUGEHÖRIGEN REGULIERUNGSVERFAHRENS

REGULATION SYSTEM FOR CONTROLLING THE VIBRATORY BEHAVIOR AND/OR THE TORSION STABILITY OF A DRIVETRAIN, A ROTORCRAFT FITTED WITH SUCH A REGULATION SYSTEM, AND AN ASSOCIATED REGULATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2017 FR 1770621**

(43) Date de publication de la demande:
**19.12.2018 Bulletin 2018/51**

(73) Titulaire: **Airbus Helicopters**
**13725 Marignane Cedex (FR)**

(72) Inventeur: **Leonard, Anthony**
**13100 Aix en Provence (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A2- 0 092 424    EP-A2- 0 398 839**
**EP-A2- 2 719 881    US-A- 3 241 077**
**US-A- 4 519 743    US-A- 5 189 620**

EP 3 415 421 B1

**Description**

La présente invention concerne le domaine des aéronefs et plus particulièrement celui des giravions et de leurs chaînes cinématiques comportant notamment une boite de transmission de puissance, des arbres de transmission de puissance associés, au moins un rotor principal permettant au moins la sustentation, voire la propulsion du giravion.

Une telle chaîne cinématique est ainsi entraînée en rotation par au moins un moteur tel un turbomoteur comportant d'une part un générateur de gaz tournant à un régime de rotation NG et d'autre part une turbine libre tournant à un régime de rotation NTL destinée à entraîner en rotation une chaine cinématique de giravion.

L'ensemble composé du (ou des) turbomoteur(s) et de la chaîne cinématique constitue alors la chaîne cinématique de transmission de puissance du giravion.

L'invention vise plus précisément les systèmes de régulation garantissant un comportement vibratoire en torsion satisfaisant et/ou une stabilité en torsion d'une telle chaîne cinématique et les procédés de régulation correspondants. De tels systèmes comportent alors au moins un organe doseur de carburant pour alimenter en carburant le (ou les) turbomoteur(s), le régime de rotation NG et le régime NTL étant fonction de la quantité de carburant injectée dans le (ou le)s turbomoteur(s). Par suite, de tels systèmes de régulation comportent également des moyens de mesure de manière à mesurer le régime de rotation NG du générateur de gaz et le régime NTL de la turbine libre du (ou des) turbomoteur(s).

De façon générale, il est connu que, dans certaines conditions de vol d'un giravion, les modes propres en torsion de sa chaîne cinématique peuvent se coupler à ceux d'un fuselage du giravion et peuvent alors engendrer des phénomènes de nature différente tels que les comportements vibratoires de type phénomènes de résonnance vibratoire forcée de la chaine cinématique soumise à une excitation imposée ou encore les phénomènes d'instabilité qui caractérisent la réponse libre de cette chaine cinématique écartée de sa position d'équilibre à la suite d'une perturbation vibratoire. Ces phénomènes peuvent alors endommager en fatigue cette chaine cinématique et les structures associées en raison de la création de déformations importantes, les instabilités pouvant quant à elles entraîner la destruction soudaine de ces éléments en raison de la divergence des oscillations.

Le demandeur a notamment décrit ce problème dans le document FR 2 843 812 et apporté une solution pour contrôler la stabilité en torsion de la chaîne cinématique d'un giravion sans atténuer le gain de la régulation. Une telle régulation est alors réalisée en ajustant la phase de la fonction de transfert d'un filtre NTL placé sur une boucle de régulation, ce filtre NTL permettant de filtrer la mesure d'un régime de rotation NTL issue des moyens de mesure. Cette régulation permet alors d'assurer le comportement vibratoire en torsion et/ou la stabilité en torsion d'une chaîne cinématique à une vitesse de rotation prédéterminée NR du rotor principal du giravion.

Cependant, un tel système de régulation ne permet pas de contrôler le comportement vibratoire en torsion et la stabilité en torsion de la chaîne cinématique pour les giravions dont la vitesse de rotation NR de leur rotor principal est fortement variable notamment par exemple pour répondre à des contraintes au niveau de leur empreinte acoustique ou pour limiter la vitesse en bout de pale à des vitesses d'avancements élevées d'un giravion. Une telle variation de la vitesse de rotation NR génère en effet une variation importante de la fréquence de résonance du premier mode en torsion de la chaîne cinématique qui ne peut être filtrée en agissant uniquement sur la phase de la fonction de transfert du filtre NTL.

Le système de régulation et le procédé de régulation tels que décrits dans le document FR 2 843 812 ne sont donc pas adaptés pour les giravions de dernière génération dont la loi de commande de la vitesse de rotation NR peut par exemple varier entre 5% et 10% d'une vitesse de rotation nominale NR1, voire potentiellement davantage selon l'évolution des techniques, et plus particulièrement selon une plage de valeurs potentiellement comprise entre 90% et 115% de la vitesse de rotation nominale NR1.

De même, les documents EP 0 092 424, EP 2 719 881, EP 0 398 839, US 5 189 620, US 4 519 743 et US 3 241 077 décrivent d'autres systèmes de régulation permettant de contrôler le comportement vibratoire en torsion d'une chaîne cinématique de giravion.

La présente invention a alors pour objet de proposer un système de régulation et un procédé de régulation permettant de s'affranchir des limitations mentionnées ci-dessus. Ce système de régulation permet en effet de contrôler le comportement vibratoire en torsion et/ou la stabilité en torsion d'une chaîne cinématique de giravion sur toute la plage de variation de la vitesse rotation NR d'un rotor principal de giravion.

L'invention se rapporte donc à un système de régulation pour contrôler le comportement vibratoire en torsion et/ou la stabilité en torsion d'une chaîne cinématique d'un giravion, le système de régulation comportant deux boucles de régulation imbriquées l'une dans l'autre, les deux boucles de régulation étant agencées "en cascade" l'une par rapport à l'autre, pour réguler d'une part un premier régime de rotation NG d'un générateur de gaz d'au moins un turbomoteur entraînant en rotation la chaîne cinématique et d'autre part un second régime de rotation NTL d'une turbine libre de ce (ou ces) turbomoteur(s), le système de régulation comportant au moins :

- un organe doseur de carburant piloté par un dispositif de commande, le dispositif de commande générant, à partir d'une consigne de débit de carburant, une commande de dosage de carburant destiné à être injecté dans le (ou les) turbomoteur(s),

- un premier moyen de mesure pour mesurer un premier régime de rotation du générateur de gaz du (ou des) turbomoteur(s),
- un premier comparateur pour générer un premier écart d'une première boucle de régulation, le premier écart étant généré en comparant une première consigne de premier régime de rotation avec le premier régime de rotation mesuré,
- un premier correcteur pour corriger le premier écart et générer la consigne de débit de carburant,
- un second moyen de mesure pour mesurer le second régime de rotation NTL de la turbine libre du (ou des) turbomoteur(s),
- un filtre pour filtrer le second régime de rotation mesuré et générer un signal filtré, ledit système de régulation comportant au moins un calculateur pour déterminer des coefficients de filtrage dudit filtre, lesdits coefficients de filtrage étant variables et associés audit filtre de manière récursive par ledit au moins un calculateur pour contrôler le comportement vibratoire en torsion et/ou la stabilité en torsion de ladite chaîne cinématique dudit giravion, ledit filtre étant du type coupe-bande pour couper une bande de fréquences incluant une fréquence d'un premier mode propre en torsion de ladite chaîne cinématique,
- un second comparateur pour générer un second écart d'une seconde boucle de régulation, le second écart étant généré en comparant une seconde consigne de second régime de rotation avec le signal filtré,
- un second correcteur pour corriger le second écart et générer la première consigne de premier régime de rotation, le filtre étant du second ordre, le filtre étant défini par une fonction de transfert de la forme :

$$\frac{\text{NTLfiltré}}{\text{NTLmesuré}} = \frac{\left(1 + \frac{2 \times Z1p}{W1p} \times p + \frac{1}{W1p^2} \times p^2\right)}{\left(1 + \frac{2 \times Z2p}{W2p} \times p + \frac{1}{W2p^2} \times p^2\right)}.$$

où $NTL_{mesuré}$ est le second régime de rotation mesuré par le second moyen de mesure, $NTL_{filtré}$ est le signal filtré généré à partir du second régime de rotation $NTL_{mesuré}$, et W1p, W2p, Z1p, Z2p correspondent aux coefficients de filtrage, et, ledit système comporte un accéléromètre pour mesurer des vibrations auxquelles est soumis ledit giravion, un organe de mesure pour mesurer une fréquence de rotation d'un rotor principal dudit giravion et une mémoire pour stocker au moins une valeur de seuil d'une amplitude des vibrations, ledit au moins un calculateur modifiant, lorsque l'amplitude mesurée des vibrations est supérieure à ladite au moins une valeur de seuil pendant une durée prédéterminée, lesdits coefficients de filtrage pour que la bande de fréquences coupée par ledit filtre inclut ladite fréquence de rotation dudit rotor principal.

Un tel filtre du second ordre est en effet adapté pour garantir la stabilité en torsion de la chaîne cinématique en conservant une marge de gain de -6dB (-6 décibels) pour les différents cas de vol d'un giravion avec au moins un turbomoteur en fonctionnement et une marge de phase comprise entre 30° et 60°. Un tel filtre est en outre un bon compromis permettant d'optimiser la réactivité du système de régulation sur l'ensemble de la plage de variation de la vitesse de rotation NR du rotor principal.

Selon un premier exemple de réalisation de l'invention, le système de régulation peut comporter une autre mémoire pour stocker au moins deux ensembles distincts de valeurs prédéterminées des coefficients de filtrage W1p, W2p, Z1p, Z2p, le (ou les) calculateur(s) déterminant un premier ensemble à appliquer au filtre lorsque le second régime de rotation mesuré $NTL_{mesuré}$ est compris dans un premier intervalle [a,b], un second ensemble à appliquer au filtre lorsque le second régime de rotation mesuré $NTL_{mesuré}$ est compris dans un second intervalle [b,c] et un nième ensemble à appliquer au filtre lorsque le second régime de rotation mesuré $NTL_{mesuré}$ est compris dans un nième intervalle [x1,x].

Avantageusement, le second correcteur peut mettre en œuvre une fonction de transfert comportant des gains fixes quelle que soit la valeur du second régime de rotation mesuré $NTL_{mesuré}$.

L'invention concerne également un giravion équipé d'un système de régulation pour contrôler le comportement vibratoire en torsion et/ou la stabilité en torsion d'une chaîne cinématique d'un tel giravion, le système de régulation comportant deux boucles de régulation imbriquées l'une dans l'autre, les deux boucles de régulation étant agencées "en cascade" l'une par rapport à l'autre, pour réguler d'une part un premier régime de rotation NG d'un générateur de gaz d'au moins un turbomoteur entraînant en rotation la chaîne cinématique et d'autre part un second régime de rotation NTL d'une turbine libre de ce (ou ces) turbomoteur(s).

Selon l'invention, le système de régulation est tel que décrit ci-dessus.

La présente invention a aussi pour objet un procédé de régulation pour contrôler le comportement vibratoire en torsion et/ou la stabilité en torsion d'une chaîne cinématique d'un giravion, le procédé de régulation mettant en œuvre deux boucles de régulation imbriquées l'une dans l'autre, les deux boucles de régulation étant agencées "en cascade" l'une par rapport à l'autre, pour réguler d'une part un premier régime de rotation NG d'un générateur de gaz d'au moins un turbomoteur entraînant en rotation la chaîne cinématique et d'autre part un second régime de rotation NTL d'une turbine libre de ce (ou ces) turbomoteur(s), le procédé comportant :

- une étape de dosage de carburant pilotée par un dispositif de commande, le dispositif de commande générant, à partir d'une consigne de débit de carburant, une commande de dosage de carburant destiné à être injecté dans le (ou les) turbomoteur(s),
- une première étape de mesure pour mesurer un premier régime de rotation $NG_{mesuré}$ du générateur de gaz du (ou des) turbomoteur(s),
- une première étape de comparaison pour générer un premier écart d'une première boucle de régulation, le premier écart étant généré en comparant une première consigne de premier régime de rotation avec le premier régime de rotation mesuré $NG_{mesuré}$,
- une première étape de correction pour corriger le premier écart et générer la consigne de débit de carburant,
- une seconde étape de mesure pour mesurer un second régime de rotation $NTL_{mesuré}$ de la turbine libre du (ou des) turbomoteur(s),
- une étape de filtrage pour filtrer le second régime de rotation mesuré $NTL_{mesuré}$ et générer un signal filtré, ladite étape de filtrage étant réalisée par un filtre de type adaptatif, ladite étape de filtrage coupant une bande de fréquences incluant une fréquence d'un premier mode propre en torsion de ladite chaîne cinématique,
- une seconde étape de comparaison pour générer un second écart d'une seconde boucle de régulation, le second écart étant généré en comparant une seconde consigne de second régime de rotation avec le signal filtré,
- une seconde étape de correction pour corriger le second écart et générer la première consigne de premier régime de rotation, le procédé de régulation comportant au moins une étape de calcul pour déterminer des coefficients de filtrage du filtre, les coefficients de filtrage étant variables et associés au filtre de manière récursive lors de l'(ou les) étape(s) de calcul pour contrôler le comportement vibratoire en torsion et/ou la stabilité en torsion de la chaîne cinématique du giravion, l'étape de filtrage étant réalisée par un filtre du second ordre, le filtre étant défini par une fonction de transfert de la forme :

$$\frac{NTL\text{filtré}}{NTL\text{mesuré}} = \frac{\left(1 + \frac{2 \times Z1p}{W1p} \times p + \frac{1}{W1p^2} \times p^2\right)}{\left(1 + \frac{2 \times Z2p}{W2p} \times p + \frac{1}{W2p^2} \times p^2\right)}.$$

où $NTL_{mesuré}$ est le second régime de rotation mesuré par le second moyen de mesure, $NTL_{filtré}$ est le signal filtré généré par le filtre à partir du second régime de rotation $NTL_{mesuré}$, et W1p, W2p, Z1p, Z2p correspondent aux coefficients de filtrage, et ledit procédé de régulation comporte une troisième étape de mesure pour mesurer les vibrations auxquelles est soumis ledit giravion, une quatrième étape de mesure pour mesurer une fréquence de rotation d'un rotor principal dudit giravion et une étape de stockage pour stocker au moins une valeur de seuil d'une amplitude des vibrations, ladite au moins une étape de calcul modifiant, lorsque l'amplitude mesurée des vibrations est supérieure à ladite au moins une valeur de seuil pendant une durée prédéterminée, lesdits coefficients de filtrage pour que la bande de fréquences coupée par ledit filtre inclut ladite fréquence de rotation dudit rotor principal.

Il a en effet été identifié qu'un filtre du second ordre est avantageux pour garantir une bonne réactivité du système de régulation tout en permettant une atténuation de -6dB (-6 décibels) sur les pics de résonnance en torsion correspondants aux modes propres en torsion.

Selon une première variante de l'invention, le procédé de régulation peut comporter une autre étape de stockage pour stocker au moins deux ensembles distincts de valeurs prédéterminées des coefficients de filtrage W1p, W2p, Z1p, Z2p, l'(ou les) étape(s) de calcul déterminant un premier ensemble à appliquer au filtre lorsque le second régime de rotation mesuré $NTL_{mesuré}$ est compris dans un premier intervalle [a,b], un second ensemble à appliquer au filtre lorsque le second régime de rotation mesuré $NTL_{mesuré}$ est compris dans un second intervalle [b,c] et un nième ensemble appliquer au filtre lorsque le second régime de rotation mesuré $NTL_{mesuré}$ est compris dans un nième intervalle [x1,x].

L'invention et ses avantages apparaîtront avec plus de détails dans le cadre de la description qui suit avec des exemples donnés à titre illustratif en référence aux figures annexées qui représentent :

- la figure 1, un schéma de principe illustrant un système de régulation conforme à l'invention,

- la figure 2, un schéma de principe illustrant un premier exemple de système de régulation conforme à l'invention,

- la figure 3, un schéma de principe illustrant un second exemple de système de régulation conforme à l'invention

- la figure 4, une vue de côté d'un giravion équipé d'un système de régulation conforme à l'invention,

- la figure 5, un logigramme illustrant un procédé de régulation conforme à l'invention,

- la figure 6, un logigramme illustrant une première variante d'un procédé de régulation conforme à l'invention, et

- la figure 7, un logigramme illustrant une seconde variante du procédé de régulation conforme à l'invention.

Les éléments présents dans plusieurs figures distinctes peuvent être affectés d'une seule et même référence.

Comme déjà évoqué, l'invention concerne donc un système de régulation permettant de contrôler la stabilité en torsion d'une chaîne cinématique d'un giravion.

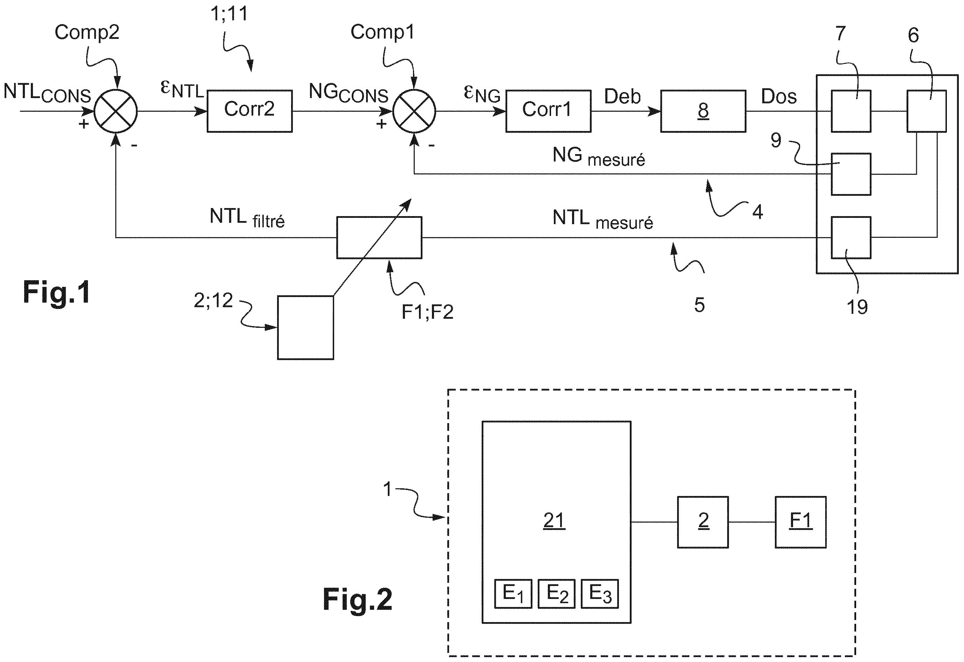

Tel que représenté à la figure 1, un tel système de régulation 1, 11 comporte deux boucles de régulation 4 et 5 imbriquées l'une dans l'autre, ces deux boucles de régulation 4 et 5 étant agencées "en cascade" l'une par rapport à l'autre, en utilisant un premier moyen de mesure 9 et un second moyen de mesure 19 permettant de mesurer respectivement un premier régime de rotation $NG_{mesuré}$ d'un générateur de gaz d'un turbomoteur 6 et un second régime de rotation $NTL_{mesuré}$ d'une turbine libre du turbomoteur 6.

Le système de régulation 1, 11 comporte également un organe doseur de carburant 7 pour injecter le carburant dans le turbomoteur 6. Un tel organe doseur de carburant 7 est ainsi piloté par un dispositif de commande 8 apte à générer une commande de dosage Dos en fonction d'une consigne de débit de carburant Deb.

Un premier comparateur Comp1 permet de comparer une première consigne $NG_{cons}$ de premier régime de rotation avec le premier régime de rotation $NG_{mesuré}$ issu du premier moyen de mesure 9. Le premier comparateur Comp1 génère alors un premier écart $\varepsilon_{NG}$ propre à la première boucle de régulation 4 et un premier correcteur Corr1 génère, à partir de ce premier écart $\varepsilon_{NG}$, la consigne de débit de carburant Deb.

Sur la seconde boucle de régulation 5, un filtre F1, F2 permet de filtrer le second régime de rotation $NTL_{mesuré}$ transmis par le second moyen de mesure 19 et génère ainsi un signal filtré $NTL_{filtré}$. Un tel filtre F1, F2 est un filtre de type coupe-bande et permet ainsi de supprimer la bande de fréquence incluant un premier mode propre en torsion de la chaine cinématique du giravion.

Un second comparateur Comp2 permet alors de comparer une seconde consigne $NTL_{cons}$ de second régime de rotation avec le signal filtré $NTL_{filtré}$. A partir de cette comparaison, le second comparateur Comp2 génère ainsi un second écart $\varepsilon_{NTL}$ pour la seconde boucle de régulation 5.

Enfin, ce second écart $\varepsilon_{NTL}$ est corrigé par un second correcteur Corr2 pour générer la première consigne $NG_{cons}$.

Le filtre F1, F2 est remarquable en ce qu'il est de type adaptatif, les coefficients de filtrage du filtre F1, F2 étant variables dans le temps pour au moins garantir la stabilité en torsion de la chaîne cinématique du giravion dont la vitesse de rotation NR du rotor principal est variable notamment pour répondre à des contraintes de niveau acoustique sur l'environnement et/ou pour limiter la vitesse en bout de pale à des vitesses d'avancements élevées d'un giravion.

En outre, le système de régulation 1, 11 comporte au moins un calculateur 2, 12 permettant de déterminer de manière récursive les coefficients de filtrage à appliquer au filtre F1, F2. Un tel calculateur 2, 12 est donc apte à modifier en temps réel, et par exemple lors d'un vol du giravion, les coefficients de filtrage du filtre F1, F2.

Le filtre F1, F2 est un filtre du second ordre et permet ainsi d'obtenir des performances optimales en présentant une fonction de transfert de la forme :

$$\frac{NTLfiltré}{NTLmesuré} = \frac{\left(1 + \frac{2 \times Z1p}{W1p} \times p + \frac{1}{W1p^2} \times p^2\right)}{\left(1 + \frac{2 \times Z2p}{W2p} \times p + \frac{1}{W2p^2} \times p^2\right)}.$$

où $NTL_{mesuré}$ est le second régime de rotation mesuré par le second moyen de mesure, $NTL_{filtré}$ est le signal filtré généré à partir du second régime de rotation $NTL_{mesuré}$, et W1p, W2p, Z1p, Z2p correspondent aux coefficients de filtrage.

Par ailleurs, il existe différentes manières de paramétrer le calculateur 2, 12 pour déterminer les coefficients du filtre F1, F2.

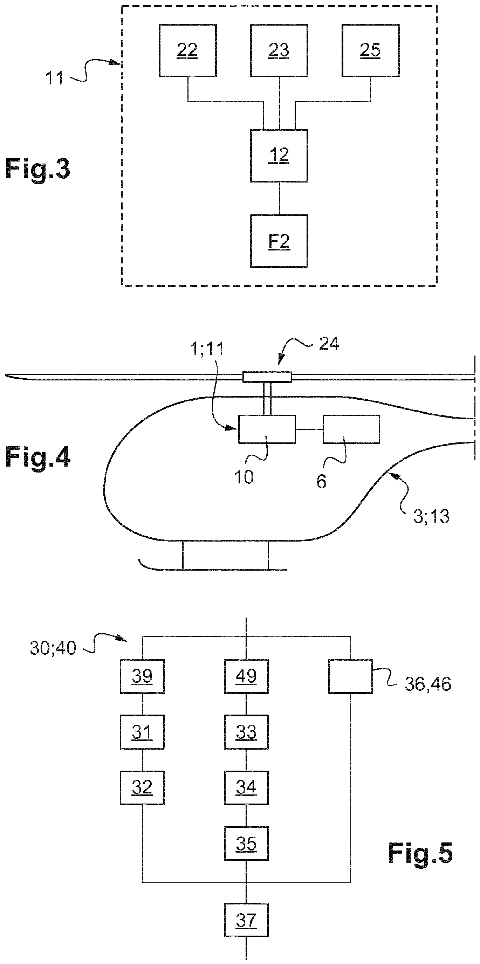

Tel que représenté à la figure 3, le système de régulation 11 comporte un accéléromètre 22 permettant de mesurer des vibrations auxquelles est soumis le giravion. Le système de régulation 11 comporte alors également un organe de mesure 23 pour mesurer une fréquence de rotation $f_{rot}$ d'un rotor principal 24 du giravion 13 tel que représenté à la figure 4.

En outre, le système de régulation 11 comporte une mémoire 25 pour stocker au moins une valeur de seuil d'une amplitude des vibrations auxquelles est soumis le giravion 13. L'accéléromètre 22, l'organe de mesure 23 et la mémoire 25 sont alors reliés au calculateur 12 permettant de modifier, lorsque l'amplitude mesurée des vibrations est supérieure à la valeur de seuil pendant une durée prédéterminée, les coefficients de filtrage pour que la bande de fréquences coupée par le filtre F2 inclut la fréquence de rotation $f_{rot}$ du rotor principal 24 du giravion 13.

Tel que représenté à la figure 2, le système de régulation 1 peut comporter une autre mémoire 21. Dans ce cas, le calculateur 2 peut être relié à cette autre mémoire 21 permettant de stocker différents ensembles E1, E2,..., En de valeurs prédéterminées de coefficients de filtrage W1p, W2p, Z1p, Z2p.

Le calculateur 2 peut alors affecter au filtre F1 un ensemble de valeurs prédéterminées de coefficients de filtrage en fonction de la valeur du second régime de rotation mesuré $NTL_{mesuré}$. Par exemple, le calculateur 2 peut surveiller la valeur courante du second régime de rotation mesuré $NTL_{mesuré}$ et choisir un premier ensemble E1 lorsque le second régime de rotation mesuré $NTL_{mesuré}$ est compris dans un premier intervalle [a,b], un second ensemble E2 lorsque le second régime de rotation mesuré $NTL_{mesuré}$ est compris dans un second intervalle [b,c] et un nième ensemble En lorsque le second régime de rotation mesuré $NTL_{mesuré}$ est compris dans un nième intervalle [x1,x].

Telle que représentée à la figure 4, l'invention se rapporte également à un giravion 3, 13 comportant un système de régulation 1, 11 tel que décrit précédemment aux figures 1 à 3. Un tel système de régulation 1, 11 permet ainsi de contrôler le comportement vibratoire en torsion et/ou la stabilité en torsion de la chaîne cinématique 10 du giravion 3, 13 à la sortie du turbomoteur 6. Une telle chaîne cinématique 10 comporte généralement une boîte de transmission de puissance principale et des arbres de transmission de puissance permettant au moins de transmettre un mouvement de rotation du turbomoteur 6 à un rotor principal 24.

Telle que représentée aux figures 5 à 7, l'invention concerne également un procédé de régulation 30, 40 permettant de contrôler le comportement vibratoire en torsion et/ou la stabilité en torsion de la chaîne cinématique 10 du giravion 3, 13.

Tel que représenté à la figure 5, un tel procédé de régulation 30, 40 comporte ainsi une étape de dosage de carburant 37 pilotée par le dispositif de commande 8. Un tel dispositif de commande 8 permet en effet de générer, à partir d'une consigne de débit de carburant Deb, une commande de dosage Dos de carburant destiné à être injecté dans le (ou les) turbomoteur(s) 6.

Le procédé de régulation 30, 40 comporte en outre une première étape de mesure 39 pour mesurer un premier régime de rotation $NG_{mesuré}$ d'un générateur de gaz du (ou des) turbomoteur(s) 6 du giravion 3, 13.

Le procédé de régulation 30, 40 réalise ensuite une première étape de comparaison 31 pour générer un premier écart $\varepsilon_{NG}$ de la première boucle de régulation 4. Comme déjà évoqué, ce premier écart $\varepsilon_{NG}$ est alors généré en comparant une première consigne $NG_{cons}$ de premier régime de rotation avec le premier régime de rotation mesuré $NG_{mesuré}$.

Le procédé de régulation 30, 40 comporte alors une première étape de correction 32 pour corriger le premier écart $\varepsilon_{NG}$ et générer la consigne de débit de carburant Deb.

Une seconde étape de mesure 49 permet de mesurer un second régime de rotation $NTL_{mesuré}$ d'une turbine libre du (ou des) turbomoteur(s) 6. Puis, une étape de filtrage 33 filtre le second régime de rotation mesuré $NTL_{mesuré}$ et génère alors un signal filtré $NTL_{filtré}$. Une telle étape de filtrage 33 est réalisée par un filtre F1, F2 de type adaptatif qui est du second ordre et de type coupe-bande.

Le procédé de régulation 30, 40 comporte également une seconde étape de comparaison 34 pour générer un second écart $\varepsilon_{NTL}$ de la seconde boucle de régulation 5. Ce second écart $\varepsilon_{NTL}$ est obtenu en comparant une seconde consigne $NTL_{cons}$ de second régime de rotation avec le signal filtré $NTL_{filtré}$.

Par ailleurs, une seconde étape de correction 35 permet de corriger le second écart $\varepsilon_{NTL}$ et de générer la première consigne $NG_{cons}$.

Un tel procédé de régulation 30, 40 comporte enfin au moins une étape de calcul 36, 46 pour déterminer des coefficients de filtrage du filtre F1, F2. En effet, ces coefficients de filtrage sont variables et sont affectés au filtre F1, F2 de manière récursive lors de l'étape de calcul 36, 46. Ces coefficients de filtrage sont alors choisis pour contrôler constamment le comportement vibratoire en torsion et/ou la stabilité en torsion de la chaîne cinématique 10 du giravion 3, 13.

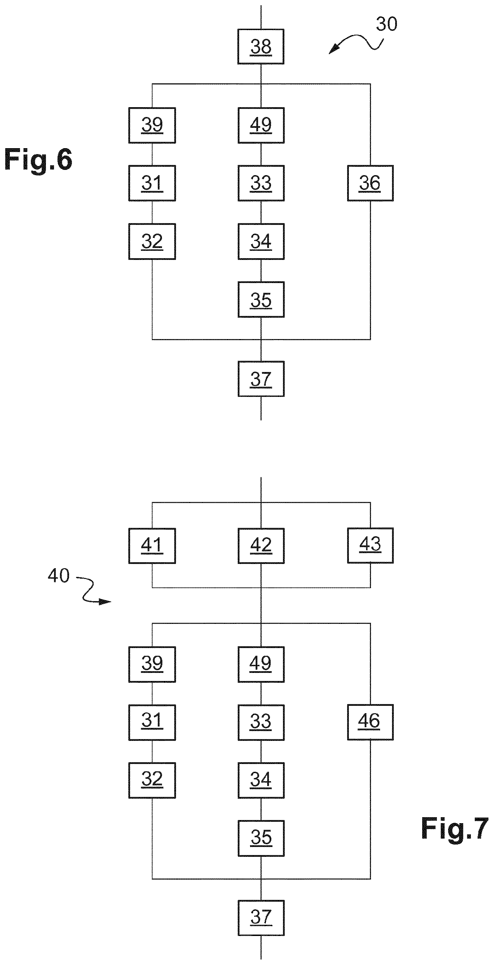

Tel que représenté à la figure 7, le procédé de régulation 40 comporte une troisième étape de mesure 41 de manière à mesurer les vibrations auxquelles est soumis le giravion 13, une quatrième étape de mesure 42 permettant de mesurer une fréquence de rotation $f_{rot}$ du rotor principal 24 du giravion 13 et une étape de stockage 43 pour stocker au moins une valeur de seuil d'une amplitude des vibrations.

L'étape de calcul 46 permet de modifier, lorsque l'amplitude mesurée des vibrations est supérieure à la valeur de seuil pendant une durée prédéterminée, les coefficients de filtrage pour que la bande de fréquences coupée par le filtre F2 comprenne la fréquence de rotation $f_{rot}$ du rotor principal 24.

Ainsi tel que représenté à la figure 6 selon une première variante de l'invention, le procédé de régulation 30 peut également comporter une autre étape de stockage 38 pour stocker au moins deux ensembles distincts E1, E2,...En de valeurs prédéterminées des coefficients de filtrage W1p, W2p, Z1p, Z2p.

Dans ce cas, l'étape de calcul 36 permet alors d'appliquer un premier ensemble E1 au filtre F1 lorsque le second régime de rotation mesuré $NTL_{mesuré}$ est compris dans un premier intervalle [a,b], un second ensemble E2 au filtre F1 lorsque le second régime de rotation mesuré $NTL_{mesuré}$ est compris dans un second intervalle [b,c] et un nième ensemble En au filtre F1 lorsque le second régime de rotation mesuré $NTL_{mesuré}$ est compris dans un nième intervalle [x1,x].

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. La portée de l'invention est définie par les revendications annexées.

## Revendications

1. Système de régulation (1, 11) pour contrôler le comportement vibratoire en torsion et/ou la stabilité en torsion d'une chaîne cinématique (10) d'un giravion (3, 13), ledit système de régulation (1, 11) comportant deux boucles de régulation (4) et (5) imbriquées l'une dans l'autre, lesdites boucles de régulation (4) et (5) étant agencées "en cascade" l'une par rapport à l'autre, pour réguler d'une part un premier régime de rotation NG d'un générateur de gaz d'au moins un turbomoteur (6) entraînant en rotation ladite chaîne cinématique (10) et d'autre part un second régime de rotation NTL d'une turbine libre de ce (ou ces) turbomoteur(s) (6), ledit système (1, 11) de régulation comportant au moins :

   • un organe doseur de carburant (7) piloté par un dispositif de commande (8), ledit dispositif de commande (8) générant, à partir d'une consigne de débit de carburant (Deb), une commande de dosage (Dos) du carburant destiné à être injecté dans ledit au moins un turbomoteur (6),
   • un premier moyen de mesure (9) pour mesurer un premier régime de rotation ($NG_{mesuré}$) dudit générateur de gaz dudit au moins un turbomoteur (6),
   • un premier comparateur (Comp1) pour générer un premier écart ($\varepsilon_{NG}$) d'une première boucle de régulation (4), ledit premier écart ($\varepsilon_{NG}$) étant généré en comparant une première consigne ($NG_{cons}$) de premier régime de rotation avec ledit premier régime de rotation mesuré ($NG_{mesuré}$),
   • un premier correcteur (Corr1) pour corriger ledit premier écart ($\varepsilon_{NG}$) et générer ladite consigne de débit de carburant (Deb),
   • un second moyen de mesure (19) pour mesurer un second régime de rotation ($NTL_{mesuré}$) de ladite turbine libre dudit au moins un turbomoteur (6),
   • un filtre (F1, F2) pour filtrer ledit second régime de rotation mesuré ($NTL_{mesuré}$) et générer un signal filtré ($NTL_{filtré}$), ledit filtre (F1, F2) étant de type adaptatif, ledit système de régulation (1, 11) comportant au moins un calculateur (2, 12) pour déterminer des coefficients de filtrage dudit filtre (F1, F2), lesdits coefficients de filtrage étant variables et associés audit filtre (F1, F2) de manière récursive par ledit au moins un calculateur (2, 12) pour contrôler le comportement vibratoire en torsion et/ou la stabilité en torsion de ladite chaîne cinématique (10) dudit giravion (3, 13), ledit filtre (F1, F2) étant du type coupe-bande pour couper une bande de fréquences incluant une fréquence d'un premier mode propre en torsion de ladite chaîne cinématique (10),
   • un second comparateur (Comp2) pour générer un second écart ($\varepsilon_{NTL}$) d'une seconde boucle de régulation (5), ledit second écart ($\varepsilon_{NTL}$) étant généré en comparant une seconde consigne ($NTL_{cons}$) de second régime de rotation avec ledit signal filtré ($NTL_{filtré}$),
   • un second correcteur (Corr2) pour corriger ledit second écart ($\varepsilon_{NTL}$) et générer ladite première consigne ($NG_{cons}$) de premier régime de rotation,
   **caractérisé en ce que** ledit filtre (F1, F2) est du second ordre, ledit filtre (F1, F2) étant défini par une fonction de transfert de la forme :

$$\frac{\text{NTLfiltré}}{\text{NTLmesuré}} = \frac{\left(1+\frac{2\times Z1p}{W1p}\times p+\frac{1}{W1p^2}\times p^2\right)}{\left(1+\frac{2\times Z2p}{W2p}\times p+\frac{1}{W2p^2}\times p^2\right)}.$$

   où $NTL_{mesuré}$ est ledit second régime de rotation mesuré par ledit second moyen de mesure (19), $NTL_{filtré}$ est ledit signal filtré généré par ledit filtre (F1, F2) à partir dudit second régime de rotation $NTL_{mesuré}$, et W1p, W2p, Z1p, Z2p correspondent auxdits coefficients de filtrage, et,
   **en ce que** ledit système (11) comporte un accéléromètre (22) pour mesurer des vibrations auxquelles est soumis ledit giravion (13), un organe de mesure (23) pour mesurer une fréquence de rotation ($f_{rot}$) d'un rotor principal (24) dudit giravion (13) et une mémoire (25) pour stocker au moins une valeur de seuil d'une amplitude des vibrations, ledit au moins un calculateur (12) modifiant, lorsque l'amplitude mesurée des vibrations est supérieure à ladite au moins une valeur de seuil pendant une durée prédéterminée, lesdits coefficients de filtrage pour que la bande de fréquences coupée par ledit filtre (F2) inclut ladite fréquence

de rotation ($f_{rot}$) dudit rotor principal (24).

2. Système selon la revendication 1, **caractérisé en ce que** ledit système de régulation (1) comporte une autre mémoire (21) pour stocker au moins deux ensembles distincts (E1), (E2),...(En) de valeurs prédéterminées desdits coefficients de filtrage (W1p, W2p, Z1p, Z2p), ledit au moins un calculateur (2) déterminant un premier ensemble (E1) à appliquer audit filtre (F1) lorsque ledit second régime de rotation mesuré ($NTL_{mesuré}$) est compris dans un premier intervalle [a,b], un second ensemble (E2) à appliquer audit filtre (F1) lorsque ledit second régime de rotation mesuré ($NTL_{mesuré}$) est compris dans un second intervalle [b,c] et un nième ensemble (En) à appliquer audit filtre (F1) lorsque ledit second régime de rotation mesuré ($NTL_{mesuré}$) est compris dans un nième intervalle [x1,x].

3. Système selon l'une quelconque des revendications 1 à 2, **caractérisé en ce que** ledit second correcteur (Corr2) met en œuvre une fonction de transfert comportant des gains fixes quelle que soit la valeur dudit second régime de rotation mesuré ($NTL_{mesuré}$).

4. Giravion (3,13) équipé d'un système de régulation (1, 11) pour contrôler le comportement vibratoire en torsion et/ou la stabilité en torsion d'une chaîne cinématique (10) dudit giravion (3, 13), ledit système de régulation (1, 11) comportant deux boucles de régulation (4) et (5) imbriquées l'une dans l'autre, lesdites deux boucles de régulation (4) et (5) étant agencées "en cascade" l'une par rapport à l'autre, pour réguler d'une part un premier régime de rotation NG d'un générateur de gaz d'au moins un turbomoteur (6) entraînant en rotation ladite chaîne cinématique (10) et d'autre part un second régime de rotation NTL d'une turbine libre dudit au moins un turbomoteur (6), **caractérisé en ce que** ledit système de régulation (1, 11) est selon l'une quelconque des revendications 1 à 3.

5. Procédé de régulation (30, 40) pour contrôler le comportement vibratoire en torsion et/ou la stabilité en torsion d'une chaîne cinématique (10) d'un giravion (3, 13), ledit procédé de régulation (30, 40) mettant en œuvre deux boucles de régulation (4) et (5) imbriquées l'une dans l'autre, lesdites boucles de régulation (4) et (5) étant agencées "en cascade" l'une par rapport à l'autre, pour réguler d'une part un premier régime de rotation NG d'un générateur de gaz d'au moins un turbomoteur (6) entraînant en rotation ladite chaîne cinématique (10) et d'autre part un second régime de rotation NTL d'une turbine libre dudit au moins un turbomoteur (6), ledit procédé de régulation (30, 40) comportant :

• une étape de dosage de carburant (37) pilotée par un dispositif de commande (8), ledit dispositif de commande (8) générant, à partir d'une consigne de débit de carburant (Deb), une commande de dosage (Dos) de carburant destiné à être injecté dans ledit au moins un turbomoteur (6),
• une première étape de mesure (39) pour mesurer un premier régime de rotation ($NG_{mesuré}$) dudit générateur de gaz dudit au moins un turbomoteur (6),
• une première étape de comparaison (31) pour générer un premier écart ($\varepsilon_{NG}$) d'une première boucle de régulation (4), ledit premier écart ($\varepsilon_{NG}$) étant généré en comparant une première consigne ($NG_{cons}$) de premier régime de rotation avec ledit premier régime de rotation mesuré ($NG_{mesuré}$),
• une première étape de correction (32) pour corriger ledit premier écart ($\varepsilon_{NG}$) et générer ladite consigne de débit de carburant (Deb),
• une seconde étape de mesure (49) pour mesurer un second régime de rotation ($NTL_{mesuré}$) de ladite turbine libre dudit au moins un turbomoteur (6),
• une étape de filtrage (33) pour filtrer ledit second régime de rotation mesuré ($NTL_{mesuré}$) et générer un signal filtré ($NTL_{filtré}$), ladite étape de filtrage (33) étant réalisée par un filtre (F1, F2) de type adaptatif, ladite étape de filtrage (33) coupant une bande de fréquences incluant une fréquence d'un premier mode propre en torsion de ladite chaîne cinématique (10),
• une seconde étape de comparaison (34) pour générer un second écart ($\varepsilon_{NTL}$) d'une seconde boucle de régulation, ledit second écart ($\varepsilon_{NTL}$) étant généré en comparant une seconde consigne ($NTL_{cons}$) de second régime de rotation avec ledit signal filtré ($NTL_{filtré}$),
• une seconde étape de correction (35) pour corriger ledit second écart ($\varepsilon_{NTL}$) et générer ladite première consigne ($NG_{cons}$) de premier régime de rotation, au moins une étape de calcul (36, 46) pour déterminer des coefficients de filtrage dudit filtre (F1, F2), lesdits coefficients de filtrage étant variables et associés audit filtre (F1, F2) de manière récursive lors de ladite au moins une étape de calcul (36, 46) pour contrôler le comportement vibratoire en torsion et/ou la stabilité en torsion de ladite chaîne cinématique (10) dudit giravion (3,13),
**caractérisé en ce que** ladite étape de filtrage (33) est réalisée par un filtre (F1, F2) du second ordre, ledit filtre (F1, F2) étant défini par une fonction de transfert de la forme :

$$\frac{\text{NTLfiltré}}{\text{NTLmesuré}} = \frac{\left(1+\frac{2\times Z1p}{W1p}\times p+\frac{1}{W1p^2}\times p^2\right)}{\left(1+\frac{2\times Z2p}{W2p}\times p+\frac{1}{W2p^2}\times p^2\right)}.$$

où $NTL_{mesuré}$ est ledit second régime de rotation mesuré par ledit second moyen de mesure (19), $NTL_{filtré}$ est ledit signal filtré généré par ledit filtre (F1, F2) à partir dudit second régime de rotation $NTL_{mesuré}$ et W1p, W2p, Z1p, Z2p correspondent auxdits coefficients de filtrage, et

**en ce que** ledit procédé de régulation (40) comporte une troisième étape de mesure (41) pour mesurer les vibrations auxquelles est soumis ledit giravion (13), une quatrième étape de mesure (42) pour mesurer une fréquence de rotation ($f_{rot}$) d'un rotor principal (24) dudit giravion (13) et une étape de stockage (43) pour stocker au moins une valeur de seuil d'une amplitude des vibrations, ladite au moins une étape de calcul (46) modifiant, lorsque l'amplitude mesurée des vibrations est supérieure à ladite au moins une valeur de seuil pendant une durée prédéterminée, lesdits coefficients de filtrage pour que la bande de fréquences coupée par ledit filtre (F2) inclut ladite fréquence de rotation ($f_{rot}$) dudit rotor principal (24).

6. Procédé selon la revendication 5,
**caractérisé en ce que** ledit procédé de régulation (30) comporte une autre étape de stockage (38) pour stocker au moins deux ensembles distincts (E1), (E2),...(En) de valeurs prédéterminées desdits coefficients de filtrage (W1p, W2p, Z1p, Z2p), ladite au moins une étape de calcul (36) déterminant un premier ensemble (E1) à appliquer audit filtre (F1) lorsque ledit second régime de rotation mesuré ($NTL_{mesuré}$) est compris dans un premier intervalle [a,b], un second ensemble (E2) à appliquer audit filtre (F1) lorsque ledit second régime de rotation mesuré ($NTL_{mesuré}$) est compris dans un second intervalle [b,c] et un nième ensemble (En) à appliquer audit filtre (F1) lorsque ledit second régime de rotation mesuré ($NTL_{mesuré}$) est compris dans un nième intervalle [x1,x].

## Patentansprüche

1. Regelsystem (1, 11) zur Regelung des Torsionsschwingungsverhaltens und/oder der Torsionsstabilität eines Antriebsstrangs (10) eines Drehflügelflugzeugs (3, 13), wobei das Regelsystem (1, 11) zwei ineinander verschachtelte Regelkreise (4) und (5) umfasst, wobei die Regelkreise (4) und (5) "kaskadenartig" zueinander angeordnet sind, um einerseits eine erste Drehzahl NG eines Gasgenerators von mindestens einem Turbomotor (6), der den Antriebsstrang (10) in Drehung versetzt, und andererseits eine zweite Drehzahl NTL einer freien Turbine dieses Turbomotors (oder dieser Turbomotoren) (6) zu regeln, wobei das Regelsystem (1, 11) mindestens umfasst:

- eine von einer Steuervorrichtung (8) angesteuerte Kraftstoffdosiereinrichtung (7), wobei die Steuervorrichtung (8) aus einem Kraftstoffdurchsatzsollwert (Deb) einen Dosierbefehl (Dos) für den in den mindestens einen Turbomotor (6) einzuspritzenden Kraftstoff erzeugt,
- eine erste Messeinrichtung (9) zum Messen einer ersten Drehzahl ($NG_{mesuré}$) des Gasgenerators des mindestens einen Turbomotors (6),
- einen ersten Komparator (Comp1) zum Erzeugen einer ersten Abweichung ($\varepsilon_{NG}$) eines ersten Regelkreises (4), wobei die erste Abweichung ($\varepsilon_{NG}$) durch Vergleichen eines ersten Sollwertes ($NG_{cons}$) der ersten Drehzahl mit der ersten gemessenen Drehzahl ($NG_{mesuré}$) erzeugt wird,
- einen ersten Korrektor (Corr1) zum Korrigieren der ersten Abweichung ($\varepsilon_{NG}$) und zum Erzeugen des Kraftstoffdurchsatzsollwerts (Deb),
- eine zweite Messeinrichtung (19) zum Messen einer zweiten Drehzahl ($NTL_{mesuré}$) der freien Turbine des mindestens einen Turbomotors (6),
- ein Filter (F1, F2) zum Filtern der gemessenen zweiten Drehzahl ($NTL_{mesuré}$) und zum Erzeugen eines gefilterten Signals (NTLfiltré), wobei das Filter (F1, F2) von einem adaptiven Typ ist, wobei das Regelsystem (1, 11) mindestens einen Rechner (2, 12) zum Bestimmen von Filterkoeffizienten des Filters (F1, F2) umfasst, wobei die Filterkoeffizienten variabel und dem Filter (F1, F2) durch den mindestens einen Rechner (2, 12) rekursiv zugeordnet werden, um das Torsionsschwingungsverhalten und/oder die Torsionsstabilität des Antriebsstrangs (10) des Drehflügelflugzeugs (3, 13) zu steuern, wobei das Filter (F1, F2) vom Bandsperrentyp ist, um ein Frequenzband zu sperren, das eine Frequenz einer ersten Torsionseigenschwingung des Antriebsstrangs (10) enthält,
- einen zweiten Komparator (Comp2) zum Erzeugen einer zweiten Abweichung ($\varepsilon_{NTL}$) eines zweiten Regelkreises (5), wobei die zweite Abweichung ($\varepsilon_{NTL}$) durch Vergleichen eines zweiten Sollwertes ($NTL_{cons}$) einer zweiten Drehzahl mit dem gefilterten Signal (NTLfiltré) erzeugt wird,

- einen zweiten Korrektor (Corr2) zum Korrigieren der zweiten Abweichung ($\varepsilon_{NTL}$) und zum Erzeugen des ersten Sollwerts (NG$_{cons}$) der ersten Drehzahl,

**dadurch gekennzeichnet, dass** das Filter (F1, F2) von zweiter Ordnung ist und das Filter (F1, F2) durch eine Übertragungsfunktion der Form:

$$\frac{NTLfiltré}{NTLmesuré} = \frac{\left(1+\frac{2\times Z1p}{W1p}\times p+\frac{1}{W1p^2}\times p^2\right)}{\left(1+\frac{2\times Z2p}{W2p}\times p+\frac{1}{W2p^2}\times p^2\right)}$$

definiert ist, wobei NTL$_{mesuré}$ die von der zweiten Messeinrichtung (19) gemessene zweite Drehzahl ist, NTL$_{filtré}$ das von dem Filter (F1, F2) aus der zweiten Drehzahl NTL$_{mesuré}$ erzeugte gefilterte Signal ist, und W1p, W2p, Z1p, Z2p den Filterkoeffizienten entsprechen, und

dass das System (11) einen Beschleunigungsmesser (22) zum Messen von Vibrationen, denen das Drehflügelflugzeug (13) ausgesetzt ist, ein Messelement (23) zum Messen einer Rotationsfrequenz ($f_{rot}$) eines Hauptrotors (24) des Drehflügelflugzeugs (13) und einen Speicher (25) zum Speichern mindestens eines Schwellenwerts einer Amplitude der Vibrationen umfasst, wobei der mindestens eine Rechner (12), wenn die gemessene Amplitude der Schwingungen für eine vorbestimmte Zeit größer als der mindestens eine Schwellenwert ist, die Filterkoeffizienten so modifiziert, dass das von dem Filter (F2) abgeschnittene Frequenzband die Drehfrequenz ($f_{rot}$) des Hauptrotors (24) enthält.

2. System nach Anspruch 1,
**dadurch gekennzeichnet, dass** das Regelsystem (1) einen weiteren Speicher (21) zum Speichern von mindestens zwei verschiedenen Sätzen (E1), (E2), ... (En) von vorbestimmten Werten der Filterkoeffizienten (W1p, W2p, Z1p, Z2p) aufweist, wobei der mindestens eine Rechner (2) einen auf das Filter (F1) anzuwendenden ersten Satz (E1) bestimmt, wenn die zweite gemessene Drehzahl (NTL$_{mesuré}$) in einem ersten Intervall [a,b] enthalten ist, einen auf das Filter (F1) anzuwendenden zweiten Satz (E2) bestimmt, wenn die zweite gemessene Drehzahl (NTL$_{mesuré}$) in einem zweiten Intervall [b,c] enthalten ist, und einen auf das Filter (F1) anzuwendenden n-ten Satz (En) bestimmt, wenn die zweite gemessene Drehzahl (NTL$_{mesuré}$) in einem n-ten Intervall [x1,x] enthalten ist.

3. System nach einem der Ansprüche 1 bis 2,
**dadurch gekennzeichnet, dass** der zweite Korrektor (Corr2) eine Übertragungsfunktion implementiert, die unabhängig vom Wert der zweiten gemessenen Drehgeschwindigkeit (NTL$_{mesuré}$) feste Verstärkungen umfasst.

4. Drehflügelflugzeug (3, 13) mit einem Regelsystem (1, 11) zur Regelung des Torsionsschwingungsverhaltens und/oder der Torsionsstabilität eines Antriebsstrangs (10) des Drehflügelflugzeugs (3, 13), wobei das Regelsystem (1, 11) zwei ineinander verschachtelte Regelkreise (4) und (5) umfasst, wobei die beiden Regelkreise (4) und (5) "kaskadenartig" zueinander angeordnet sind, um einerseits eine erste Drehzahl NG eines Gasgenerators von mindestens einem Turbomotor (6), der den Antriebsstrang (10) in Drehung versetzt, und andererseits eine zweite Drehzahl NTL einer freien Turbine des mindestens einen Turbomotors (6) zu regeln,
**dadurch gekennzeichnet, dass** das Regelsystem (1, 11) nach einem der Ansprüche 1 bis 3 ausgeführt ist.

5. Regelverfahren (30, 40) zur Steuerung des Torsionsschwingungsverhaltens und/oder der Torsionsstabilität eines Antriebsstrangs (10) eines Drehflügelflugzeugs (3, 13), wobei das Regelverfahren (30, 40) zwei ineinander verschachtelte Regelkreise (4) und (5) realisiert, die "kaskadenartig" zueinander angeordnet sind, um einerseits eine erste Drehzahl NG eines Gasgenerators mindestens eines Turbomotors (6), der den Antriebsstrang (10) in Drehung versetzt, und andererseits eine zweite Drehzahl NTL einer freien Turbine des mindestens einen Turbomotors (6) zu regeln, wobei das Regelverfahren (30, 40) umfasst:

- einen Kraftstoffdosierschritt (37), der von einer Steuervorrichtung (8) gesteuert wird, wobei die Steuervorrichtung (8) aus einem Kraftstoffdurchsatzsollwert (Deb) einen Dosierbefehl (Dos) für in den mindestens einen Turbomotor (6) einzuspritzenden Kraftstoff erzeugt,
- einen ersten Messschritt (39) zum Messen einer ersten Drehzahl (NG$_{mesuré}$) des Gasgenerators des mindestens einen Turbomotors (6),
- einen ersten Vergleichsschritt (31) zum Erzeugen einer ersten Abweichung ($\varepsilon_{NG}$) eines ersten Regelkreises (4), wobei die erste Abweichung ($\varepsilon_{NG}$) durch Vergleichen eines ersten Sollwertes (NG$_{cons}$) der ersten Drehzahl mit der gemessenen ersten Drehzahl (NG$_{mesuré}$) erzeugt wird;
- einen ersten Korrekturschritt (32) zum Korrigieren der ersten Abweichung ($\varepsilon_{NG}$) und zum Erzeugen des Kraftstoffdurchsatzsollwerts (Deb),

- einen zweiten Messschritt (49) zum Messen einer zweiten Drehzahl ($NTL_{mesuré}$) der freien Turbine des mindestens einen Turbomotors (6),
- einen Filterungsschritt (33) zum Filtern der gemessenen zweiten Drehzahl ($NTL_{mesuré}$) und zum Erzeugen eines gefilterten Signals ($NTL_{filtré}$), wobei der Filterungsschritt (33) durch ein Filter (F1, F2) vom adaptiven Typ durchgeführt wird, wobei der Filterungsschritt (33) ein Frequenzband abschneidet, das eine Frequenz einer ersten Torsionseigenschwingung des Antriebsstrangs (10) enthält,
- einen zweiten Vergleichsschritt (34) zum Erzeugen einer zweiten Abweichung ($\varepsilon_{NTL}$) eines zweiten Regelkreises, wobei die zweite Abweichung ($\varepsilon_{NTL}$) durch Vergleichen eines zweiten Sollwertes ($NTL_{cons}$) einer zweiten Drehzahl mit dem gefilterten Signal ($NTL_{filtré}$) erzeugt wird,
- einen zweiten Korrekturschritt (35) zum Korrigieren der zweiten Abweichung ($\varepsilon_{NTL}$) und zum Erzeugen des ersten Sollwerts ($NG_{cons}$) der ersten Drehgeschwindigkeit, mindestens einen Berechnungsschritt (36, 46) zum Bestimmen von Filterkoeffizienten des Filters (F1, F2), wobei die Filterkoeffizienten variabel sind und dem Filter (F1, F2) während des mindestens einen Berechnungsschritts (36, 46) rekursiv zugeordnet werden, um das Torsionsschwingungsverhalten und/oder die Torsionsstabilität des Antriebsstrangs (10) des Drehflügelflugzeugs (3, 13) zu steuern,
**dadurch gekennzeichnet,**
**dass** der Filterungsschritt (33) durch ein Filter (F1, F2) zweiter Ordnung ausgeführt wird, wobei das Filter (F1, F2) durch eine Übertragungsfunktion der Form:

$$\frac{\text{NTLfiltré}}{\text{NTLmesuré}} = \frac{\left(1+\frac{2\times Z1p}{W1p}\times p+\frac{1}{W1p^2}\times p^2\right)}{\left(1+\frac{2\times Z2p}{W2p}\times p+\frac{1}{W2p^2}\times p^2\right)}$$

definiert ist, wobei $NTL_{mesuré}$ die von der zweiten Messeinrichtung (19) gemessene zweite Drehzahl ist, $NTL_{filtré}$ das von dem Filter (F1, F2) aus der zweiten Drehzahl $NTL_{mesuré}$ erzeugte gefilterte Signal ist und W1p, W2p, Z1p, Z2p den Filterkoeffizienten entsprechen, und
**dass** das Steuerverfahren (40) einen dritten Messschritt (41) zum Messen von Schwingungen, denen das Drehflügelflugzeug (13) ausgesetzt ist, einen vierten Messschritt (42) zum Messen einer Drehfrequenz ($f_{rot}$) eines Hauptrotors (24) des Drehflügelflugzeugs (13) und einen Speicherschritt (43) zum Speichern mindestens eines Schwellenwertes einer Amplitude der Schwingungen umfasst, wobei der mindestens eine Berechnungsschritt (46), wenn die gemessene Amplitude der Schwingungen für eine vorbestimmte Zeit größer als der mindestens eine Schwellenwert ist, die Filterkoeffizienten so modifiziert, dass das von dem Filter (F2) abgeschnittene Frequenzband die Rotationsfrequenz ($f_{rot}$) des Hauptrotors (24) enthält.

6. Verfahren nach Anspruch 5,
**dadurch gekennzeichnet, dass** das Regelverfahren (30) einen weiteren Speicherschritt (38) zum Speichern von mindestens zwei unterschiedlichen Sätzen (E1), (E2), ...(En) von vorbestimmten Werten der Filterkoeffizienten (W1p, W2p, Z1p, Z2p) umfasst, wobei der mindestens eine Berechnungsschritt (36) einen ersten Satz (E1), der auf das Filter (F1) anzuwenden ist, wenn die zweite gemessene Drehzahl ($NTL_{mesuré}$) in einem ersten Intervall [a,b] enthalten ist, einen zweiten Satz (E2), der auf das Filter (F1) anzuwenden ist, wenn die zweite gemessene Drehzahl ($NTL_{mesuré}$) innerhalb eines zweiten Intervalls [b,c] liegt, und einen n-ten Satz (En) bestimmt, der auf das Filter (F1) anzuwenden ist, wenn die zweite gemessene Drehzahl ($NTL_{mesuré}$) innerhalb eines n-ten Intervalls [x1, x] liegt.

**Claims**

1. Regulation system (1, 11) for controlling the torsional vibration behaviour and/or the torsional stability of a kinematic chain (10) of a rotorcraft (3, 13), the regulation system (1, 11) comprising two regulation loops (4) and (5) which are imbricated one in the other, the regulation loops (4) and (5) being arranged "in a cascading manner" relative to each other in order to control, on the one hand, a first rotation speed NG of a gas generator of at least one turbo-engine (6) which rotatably drives the kinematic chain (10) and, on the other hand, a second rotation speed NTL of a free turbine of this/these turbo-engine(s) (6), the regulation system (1, 11) comprising at least:

• a fuel metering member (7) which is controlled by a control device (8), the control device (8) generating, based on a fuel flow rate specification (Deb), a metering command (Dos) of the fuel which is intended to be injected into the at least one turbo-engine (6),

• a first measuring means (9) for measuring a first rotation speed ($NG_{mesuré}$) of the gas generator of the at least one turbo-engine (6),

• a first comparator (Comp1) for generating a first deviation ($\varepsilon_{NG}$) of a first regulation loop (4), the first deviation ($\varepsilon_{NG}$) being generated by comparing a first specification ($NG_{cons}$) for a first rotation speed with the first measured rotation speed ($NG_{mesuré}$),

• a first corrector (Corr1) for correcting the first deviation ($\varepsilon_{NG}$) and generating the fuel flow rate specification (Deb),

• a second measuring means (19) for measuring a second rotation speed ($NTL_{mesuré}$) of the free turbine of the at least one turbo-engine (6),

• a filter (F1, F2) for filtering the second measured rotation speed ($NTL_{mesuré}$) and generating a filtered signal ($NTL_{filtré}$), the filter (F1, F2) being of the adaptive type, the regulation system (1, 11) comprising at least one processor (2, 12) for determining filtering coefficients of the filter (F1, F2), the filtering coefficients being variable and associated with the filter (F1, F2) in a recursive manner by the at least one processor (2, 12) for controlling the torsional vibration behaviour and/or the torsional stability of the kinematic chain (10) of the rotorcraft (3, 13), the filter (F1, F2) being of the notch filter type for cutting a frequency range which includes a frequency of a first individual torsion mode of the kinematic chain (10),

• a second comparator (Comp2) for generating a second deviation ($\varepsilon_{NTL}$) of a second regulation loop (5), the second deviation ($\varepsilon_{NTL}$) being generated by comparing a second specification ($NTL_{cons}$) of the second rotation speed with the filtered signal ($NTL_{filtré}$),

• a second corrector (Corr2) for correcting the second deviation ($\varepsilon_{NTL}$) and generating the first specification ($NG_{cons}$) of the first rotation speed, **characterised in that** the filter (F1, F2) is of the second order, the filter (F1, F2) being defined by a transfer function having the form:

$$\frac{NTLfiltré}{NTLmesuré} = \frac{\left(1 + \dfrac{2 \times Z1p}{W1p} \times p + \dfrac{1}{W1p^2} \times p^2\right)}{\left(1 + \dfrac{2 \times Z2p}{W2p} \times p + \dfrac{1}{W2p^2} \times p^2\right)}$$

where $NTL_{mesuré}$ is the second rotation speed measured by the second measurement means (19), $NTL_{filtré}$ is the filtered signal generated by the filter (F1, F2) from the second rotation speed $NTL_{mesuré}$, and W1p, W2p, Z1p, Z2p, correspond to the filtering coefficients, and

**in that** the system (11) comprises an accelerometer (22) for measuring vibrations to which the rotorcraft (13) is subjected, a measurement member (23) for measuring a rotation frequency ($f_{rot}$) of a main rotor (24) of the rotorcraft (13) and a memory (25) for storing at least one threshold value of an amplitude of the vibrations, the at least one processor (12) modifying, when the measured amplitude of the vibrations is greater than the at least one threshold value for a predetermined period of time, the filtering coefficients so that the frequency range cut by the filter (F2) includes the rotation frequency ($f_{rot}$) of the main rotor (24).

2. System according to claim 1,
**characterised in that** the regulation system (1) comprises another memory (21) for storing at least two separate groups (E1), (E2)... (En) of predetermined values of the filtering coefficients (W1p, W2p, Z1p, Z2p), the at least one processor (2) determining a first group (E1) to be applied to the filter (F1) when the second measured rotation speed ($NTL_{mesuré}$) is within a first range [a, b], a second group (E2) to be applied to the filter (F1) when the second measured rotation speed ($NTL_{mesuré}$) is within a second range [b, c] and an nth group (En) to be applied to the filter (F1) when the second measured rotation speed ($NTL_{mesuré}$) is within an nth range [x1, x] .

3. System according to either claim 1 or claim 2, **characterised in that** the second corrector (Corr2) uses a transfer function which comprises fixed gains regardless of the value of the second measured rotation speed ($NTL_{mesuré}$)

4. Rotorcraft (3, 13) provided with a regulation system (1, 11) for controlling the torsional vibration behaviour and/or the torsional stability of a kinematic chain (10) of the rotorcraft (3, 13), the regulation system (1, 11) comprising two regulation loops (4) and (5) which are imbricated one in the other, the regulation loops (4) and (5) being arranged "in a cascading manner" relative to each other in order to control, on the one hand, a first rotation speed NG of a gas generator of at least one turbo-engine (6) which rotatably drives the kinematic chain (10) and, on the other hand, a second rotation speed NTL of a free turbine of the at least one turbo-engine (6), **characterised in that** the regulation system (1, 11) is in accordance with any one of claims 1 to 3.

5. Regulation method (30, 40) for controlling the torsional vibration behaviour and/or the torsional stability of a kinematic chain (10) of a rotorcraft (3, 13), the regulation method (30, 40) using two regulation loops (4) and (5) which are imbricated one in the other, the regulation loops (4) and (5) being arranged "in a cascading manner" relative to each other in order to control, on the one hand, a first rotation speed NG of a gas generator of at least one turbo-engine (6) which rotatably drives the kinematic chain (10) and, on the other hand, a second rotation speed NTL of a free turbine of the at least one turbo-engine (6), the regulation method (30, 40) comprising:

- a fuel metering step (37) which is controlled by a control device (8), the control device (8) generating, based on a fuel flow rate specification (Deb), a metering command (Dos) of the fuel which is intended to be injected into the at least one turbo-engine (6),
- a first measuring step (39) for measuring a first rotation speed ($NG_{mesuré}$) of the gas generator of the at least one turbo-engine (6),
- a first comparison step (31) for generating a first deviation ($\varepsilon_{NG}$) of a first regulation loop (4), the first deviation ($\varepsilon_{NG}$) being generated by comparing a first specification ($NG_{cons}$) for a first rotation speed with the first measured rotation speed ($NG_{mesuré}$),
- a first correction step (32) for correcting the first deviation ($\varepsilon_{NG}$) and generating the fuel flow rate specification (Deb),
- a second measuring step (49) for measuring a second rotation speed ($NTL_{mesuré}$) of the free turbine of the at least one turbo-engine (6),
- a filtering step (33) for filtering the second measured rotation speed ($NTL_{mesuré}$) and generating a filtered signal ($NTL_{filtré}$), the filtering step (33) being carried out by a filter (F1, F2) of the adaptive type, the filtering step (33) cutting a frequency range including a frequency of a first individual torsion mode of the kinematic chain (10),
- a second comparison step (34) for generating a second deviation ($\varepsilon_{NTL}$) of a second regulation loop, the second deviation ($\varepsilon_{NTL}$) being generated by comparing a second specification ($NTL_{cons}$) of the second rotation speed with the filtered signal ($NTL_{filtré}$),
- a second correction step (35) for correcting the second deviation ($\varepsilon_{NTL}$) and generating the first specification ($NG_{cons}$) of the first rotation speed, at least one calculation step (36, 46) for determining the filtering coefficients of the filter (F1, F2), the filtering coefficients being variable and associated with the filter (F1, F2) in a recursive manner during the at least one calculation step (35, 46) for controlling the torsional vibration behaviour and/or the torsional stability of the kinematic chain (10) of the rotorcraft (3, 13),
**characterised in that** the filtering step (33) is carried out by a filter (F1, F2) of the second order, the filter (F1, F2) being defined by a transfer function having the form:

$$\frac{\text{NTLfiltré}}{\text{NTLmesuré}} = \frac{\left(1 + \dfrac{2 \times Z1p}{W1p} \times p + \dfrac{1}{W1p^2} \times p^2\right)}{\left(1 + \dfrac{2 \times Z2p}{W2p} \times p + \dfrac{1}{W2p^2} \times p^2\right)}$$

where $NTL_{mesuré}$ is the second rotation speed measured by the second measurement means (19), $NTL_{filtré}$ is the filtered signal generated by the filter (F1, F2) from the second rotation speed $NTL_{mesuré}$, and W1p, W2p, Z1p, Z2p correspond to the filtering coefficients, and
**in that** the regulation method (40) comprises a third measurement step (41) for measuring the vibrations to which the rotorcraft (13) is subjected, a fourth measurement step (42) for measuring a rotation frequency ($f_{rot}$) of a main rotor (24) of the rotorcraft (13) and a storage step (43) for storing at least one threshold value of an amplitude of the vibrations, the at least one calculation step (46) modifying, when the measured amplitude of the vibrations is greater than the at least one threshold value for a predetermined period of time, the filtering coefficients so that the frequency range cut by the filter (F2) includes the rotation frequency ($f_{rot}$) of the main rotor (24).

6. Method according to claim 5,
**characterised in that** the regulation method (30) comprises another storage step (38) for storing at least two different groups (E1), (E2)... (En) of predetermined values of the filtering coefficients (W1p, W2p, Z1p, Z2p), the at least one calculation step (36) determining a first group (E1) to be applied to the filter (F1) when the second measured rotation speed ($NTL_{mesuré}$) is within a first range [a, b], a second group (E2) to be applied to the filter (F1) when the second measured rotation speed ($NTL_{mesuré}$) is within a second range [b, c] and an nth group (En) to be applied to the filter (F1) when the second measured rotation speed ($NTL_{mesuré}$) is within an nth range [x1, x].

**Fig.1**

$NTL_{CONS}$ — Comp2 — $\varepsilon_{NTL}$ — 1;11 — Corr2 — $NG_{CONS}$ — Comp1 — $\varepsilon_{NG}$ — Corr1 — Deb — 8 — Dos

7  6

9

$NG$ $_{mesuré}$

4

$NTL$ $_{filtré}$  F1;F2  $NTL$ $_{mesuré}$

2;12

5

19

**Fig.2**

1

21

2  F1

$E_1$  $E_2$  $E_3$

EP 3 415 421 B1

14

**Fig.3**

22    23    25

12

F2

11

**Fig.4**

1;11    24

10    6

3;13

**Fig.5**

30;40

39    49    36,46

31    33

32    34

35

37

Fig.6

Fig.7

**EP 3 415 421 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2843812
- EP 0092424 A
- EP 2719881 A
- EP 0398839 A
- US 5189620 A
- US 4519743 A
- US 3241077 A